# EUROPÄISCHE PATENTANMELDUNG

(11) **EP 1 182 009 A1**
(43) Veröffentlichungstag der Anmeldung: **27.02.2002**
(21) Anmeldenummer: 00710016.7
(22) Anmeldetag: 23.08.2000
(51) Int. Cl.: B24D 3/20, B24D 3/14, B24D 5/06, B23F 21/03

(54) **Honwerkzeug**

(71) Anmelder: Hermes Schleifmittel GmbH & Co., D-22547 Hamburg (DE)
(72) Erfinder: Krupp, Axel, Dipl.-Ing., 22764 Hamburg (DE)
(74) Vertreter: Glawe, Delfs, Moll & Partner

(57) **Zusammenfassung**

Honwerkzeug, insbesondere innen- oder außenverzahnter Honring zum Fertigbearbeiten von Zahnrädern, enthaltend eine Kunstharz-Bindemittelmatrix (1) und darin eingelagerte, keramisch gebundene Schleifkorn-Hohlkörper (2).

## Beschreibung

Die Erfindung betrifft ein Honwerkzeug, insbesondere ein verzahntes Honwerkzeug zur Fertigbearbeitung von Zahnrädern.

Es sind verzahnte Honwerkzeuge bekannt (EP-A 692 342, DE-C 44 47 036), die in einer Kunstharzmatrix keramisch gebundene Schleifkornkonglomerate enthalten. Sie erlauben einen stärkeren Materialabtrag als herkömmliche Honwerkzeuge, bei denen die Schleifkörner jeweils einzeln in eine Kunstharzmatrix eingebettet sind, so daß gegebenenfalls auf einen besonderen Schleifvorgang vor dem Honen verzichtet werden kann. Das beruht darauf, daß die Körner dank der keramischen Bindung starr in den Konglomeraten gehalten sind und deshalb mit höherer Steifigkeit auf das Werkstück zur Einwirkung gebracht werden können, als dies bei einzeln in der Kunstharzmatrix gehaltenen Körnern möglich ist. Obwohl die Konglomerate in der weicheren Kunstharzmatrix eingebettet sind, können sie unter den Schnittkräften kaum nachgeben, weil die Kraftübertragung zwischen ihnen und der Matrix über ihre im Vergleich mit der Oberfläche eines Einzelkorns sehr große Oberfläche stattfindet. Insofern besteht eine Abhängigkeit der Schleifeigenschaften u.a. von der Größe der Konglomerate und damit von der Menge des keramisch gebundenen Schleifkorns sowie der Menge des keramischen Bindemittels, die die Freiheit in der Einstellung der Schleifeigenschaften beschränkt.

Der Erfindung liegt die Aufgabe zugrunde, die Einstellbarkeit der Schleifeigenschaften zu verbessern. Sie erreicht dies durch die Merkmale des Anspruchs 1 und vorzugsweise diejenigen der Unteransprüche.

Demgemäß enthält ein Honwerkzeug in einer Matrix aus weicherem Bindemittel eingebettete Hohlkörper mit durch eine härtere Bindung gebundenem Schleifkorn. Diese mechanischen Eigenschaften des Matrix-Bindemittels bzw. der Hohlkörperbindung werden maßgeblich durch deren E-Moduln geprägt. Das Verhältnis der E-Moduln des Materials der härteren Bindung zu dem des weicheren Bindemittels soll mindestens 2:1, vorzugsweise mindestens 4:1, sein. Dies entspricht dem Verhältnis der E-Moduln von gegenwärtig als Bindemittel für Schleifwerkzeuge verwendeten Epoxidharzen und Keramiken. Für die Matrix verwendet man daher zweckmäßigerweise ein organisches Bindemittel, während man für die Bindung der Hohlkörper zweckmäßigerweise keramische Stoffe verwendet.

Die erfindungsgemäßen Schleifkorn-Hohlkörper haben je für sich eine größere Steifigkeit als das umgebende Matrix-Material. Sie verhalten sich demgemäß ähnlich den vorbekannten Konglomeraten, weil sie sich einerseits großflächig über ihre Außenfläche an der Matrix abstützen und andererseits den in ihnen enthaltenen Schleifkörnern dank der festen Bindung den für eine hohe spezifische Abtragsleistung erforderlichen Halt geben. Während aber bei jenen die Größe der in der Schleiffläche spanhebend und reibend auf das Werkzeug einwirkenden Fläche des Konglomerats in einem unveränderbaren Verhältnis zu dessen Gesamtgröße steht, läßt sich dank der Erfindung die Größe dieser Flächen durch die Bestimmung der Größe des Hohlraums beliebig einstellen. Die Schleifkraft, die in einem erfindungsgemäßen Werkzeug über einen Schleifkorn-Hohlkörper übertragen wird, wirkt auf eine geringere Zahl von Schleifkörnern als bei einem gleich großen Konglomerat eines bekannten Honwerkzeugs. Bei Aufwendung einer insgesamt gleichen Schleifkraft kann man dank der Erfindung dem einzelnen Schleifkorn eine größere spezifische Schleifkraft übertragen und eine entsprechend höhere Schleifleistung abverlangen. Will man dieselbe spezifische Schleifkraft am Schleifkorn oder dieselbe kornbezogene Schleifleistung wie im Stand der Technik erreichen, so ist dies bei dem erfindungsgemäßen Honwerkzeug mit einer insgesamt geringeren Schleifkraft möglich. Außerdem sind die Reibungskräfte zwischen Werkzeug und Werkstück geringer, weil die Anzahl der im Eingriff befindlichen Schleifkörner einerseits sowie die anteilige Fläche des zwischen ihnen befindlichen Bindungsmaterials andererseits in der Schleiffläche geringer sind. Der angestrebte höhere Materialabtrag kann schon bei Verwendung kleinerer Schleifkorn-Hohlkörper erreicht werden. Die Gefahr, daß das Werkzeug durch die beim Honen auftretenden Schnitt- und Normalkräfte beschädigt werden könnte, wird dadurch weiter verringert. Ferner kann die Bearbeitungsgüte dadurch gesteigert werden.

Weitere Vorteile der Erfindung bestehen darin, daß die mechanische und thermische Belastung von Werkzeug und Werkstück während der Bearbeitung verringert werden kann. Entsprechend kann eine bessere Reproduzierbarkeit des Arbeitsergebnisses erreicht werden. Die regelmäßige und kornnahe Anordnung von Hohlräumen im Werkzeug gestattet eine verbesserte Abfuhr des Honabriebs aus der Eingriffszone sowie eine verbesserte Zufuhr von Hilfsstoffen in die Eingriffszone.

Zweckmäßigerweise sind die Hohlkörper kugelförmig, da diese Form optimale Festigkeit verspricht. Außerdem ergibt sie eine geometrisch weitgehend vorbestimmte Anordnung der Schleifkörner und damit eine bessere Reproduzierbarkeit des Werkzeugs und des Arbeitsergebnisses.

Zwar ist es bekannt (DE-C 23 483 38), Schleifkorn-Hohlkugeln zur Herstellung von Schleifwerkzeugen zu verwenden. Bewährt haben sie sich aber nur bei flexiblen Schleifwerkzeugen (Schleifbändern) und nicht in starr gebundenen Schleifkörpern (Schleifscheiben). Letztere erreichten nicht die Leistung herkömmlicher Schleifscheiben. Überraschenderweise hat sich gezeigt, daß dieser Nachteil bei der Verwendung in Honwerkzeugen nicht auftritt. Dies erklärt sich wahrscheinlich aus der unterschiedlichen Beanspruchung sowie aus der im Falle der Erfindung weniger starren Verankerung der Hohlkörper im Werkzeug.

Nach einem besonderen Merkmal der Erfindung bestehen die Hohlkörper aus einer innen angeordneten Tragschale, auf deren Außenfläche das Schleifkorn mittels eines Bindemittels verankert ist. Die Bindung der jeweils zu einem Hohlkörper gehörigen Schleifkörner wird somit zum einen durch die Tragschale und zum anderen durch das zwischen der Tragschale und den Schleifkörnern wirkende Bindemittel gebildet. Die geforderte höhere Starrheit der Hohlkörper im Vergleich mit dem Matrixmaterial kommt dadurch zustande, daß zweckmäßigerweise sowohl die Tragschale als auch das Bindemittel aus einem Werkstoff mit hohem E-Modul besteht. Jedoch ist es auch möglich, lediglich die Tragschale mit der gewünschten Starrheit (hoher E-Modul) auszurüsten und ein weicheres Bindemittel zu verwenden und umgekehrt. Das Vorhandensein einer besonderen Tragschale hat den Vorteil, daß die Stabilität des Hohlkörpers nicht allein durch das Bindemittel erbracht werden muß. Dieses kann daher in Kornnähe sparsamer verwendet werden, so daß die Körner freier zum Eingriff gelangen können, ohne daß zuvor umhüllendes Bindemittel abgerieben werden muß. Dabei besteht die Möglichkeit, für die Tragschale ein Material zu wählen, das zwar die erforderliche Festigkeit verleiht, aber leicht abreibbar ist, um möglichst geringe Reibkräfte zu erzeugen. Auch dafür sind keramische Werkstoffe besonders geeignet.

Sehr zweckmäßig ist die Verwendung solcher Schleifkornhohlkugeln, wie sie sich gegenwärtig als HERMESIT® in Schleifmitteln auf Unterlage im Markt befinden, und zwar vorzugsweise derjenigen Variante von HERMESIT®, die Hohlkugeln mit einer Tragschale aus keramischem Werkstoff aufweist, auf deren Außenfläche das Schleifkorn in einschichtiger Anordnung mit einem keramischen Bindemittel gebunden ist.

Der mittlere Außendurchmesser der Hohlkörper gleicht zweckmäßigerweise einem Drittel bis einem Zwanzigstel, vorzugsweise einem Viertel bis einem Zehntel, der Zahnhöhe. Ferner liegt ihr mittlerer Außendurchmesser zweckmäßigerweise zwischen dem Fünf- bis Fünfzigfachen, vorzugsweise dem Fünf- bis Fünfundzwanzigfachen, der mittleren Korngröße. Die Dicke der Kornschicht sollte nicht größer als das Fünffache der mittleren Korngröße sein. Bevorzugt werden Hohlkugeln, bei denen die Tragschale von nicht mehr als zwei Lagen, vorzugsweise nur einer Lage, Schleifkorn umgeben ist, was einem Verhältnis der mittleren Korngröße zur Schichtdicke von 1:1 bis 1:2,5 entspricht. Der volumetrische Anteil der Schleifkornhohlkörper (einschließlich ihres Hohlraumvolumens) liegt zweckmäßigerweise zwischen 20 und 70 % des Gesamtvolumens. Der vorhandene Porenraum beschränkt sich zweckmäßigerweise im wesentlichen auf deren Hohlräume.

Die absoluten Kornhohlkugelgrößen liegen in der Regel je nach Körnung zwischen 800 und 3000 µm Außendurchmesser. Der mögliche Korngrößenbereich reicht von P 40 bis P 600. Das entspricht einer mittleren Korngröße von 412 µm bis 26 µm. Bevorzugt wird für das Verzahnungshonen der Korngrößenbereich von P 100 bis P 320 entsprechend 156 µm bis 46 µm.

Der Hohlraumdurchmesser liegt je nach Größe der Konglomerate vorzugsweise zwischen 600 und 1800 µm. Das Verhältnis der mittleren Korngröße zur Wanddicke liegt zweckmäßigerweise zwischen 1:1 und 1:5, weiter vorzugsweise zwischen 1:1,5 bis 1:2,5.

Für das Schleifkorn kann grundsätzlich jedes für den Einsatzzweck geeignete Material verwendet werden, z.B. Elektrokorund, keramischer Korund, Siliciumcarbid. Auch der Einsatz von Hochleistungsschleifmitteln wie kubisches Bornitrid kommt in Frage.

Zweckmäßigerweise enthält die Kunstharzmatrix zusätzliches Schleifkorn, wobei dies in Form von Einzelkörnern oder kleineren Konglomeraten vorliegen kann.

Das zusätzlich zu den Schleifkornhohlkörpern in der Kunstharzmatrix gebundene Schleifkorn kann von gleicher Art wie das in den Hohlkörpern verwendete oder auch von anderer Art sein. Vorzugsweise ist die Korngröße dieselbe. Sie kann aber auch abweichen. Der Anteil des in der Kunstharzmatrix gebundenen, zusätzlichen Schleifkorns kann je nach Anwendungsfall und Bearbeitungszweck größer, aber auch kleiner sein als der Anteil des in den Hohlkörpern keramisch gebundenen Schleifkorns.

Dieses zusätzliche Schleifkorn dient unter einem Aspekt als harter Füllstoff in der Kunstharzmatrix und verstärkt so die Abstützung der keramisch gebundenen Hohlkörperwände. Unter einem zweiten Aspekt nimmt dieses zusätzliche Schleifkorn selbst am Bearbeitungsprozeß teil. Dabei verbessert es durch seine vergleichsweise elastischere Bindung die erzielbare Oberflächenqualität.

Für die Kunstharzmatrix kommen alle geeigneten Kunstharze in Frage, insbesondere diejenigen, die sich in der Honwerkzeugfertigung bereits bewährt haben, wobei Bindemittel auf Epoxidharzbasis bevorzugt werden. Die erfindungsgemäßen Honwerkzeuge weisen ein deutlich effizienteres Bearbeitungsverhalten auf als ausschließlich kunstharzgebundene Honringe, ohne dabei unter der Sprödbruchempfindlichkeit rein keramischer Honwerkzeuge zu leiden.

Gegenüber vorbekannten Honringen weisen die erfindungsgemäßen Werkzeuge insbesondere folgende Vorzüge auf. Die Schnittkräfte sind niedriger. Entsprechend niedriger ist auch die thermische Belastung des Werkstücks. Die Hohlräume der geöffneten Schleifkornhohlkörper wirken an der Oberfläche des Werkzeugs als große Poren, die Späne und Abrieb aufnehmen und aus der unmittelbaren Kontaktzone zwischen Werkstück und Werkzeug fernhalten. Die Schleifkörner brauchen nicht vollständig von Keramikbindung umhüllt zu sein und müssen sich daher nicht erst freischneiden, bevor sie in Einsatz gelangen. Das gilt insbesondere dann, wenn sie lediglich durch ihre Verankerung an einer Tragschale gebunden sind. Dadurch verringern sich die Reibungskräfte zwischen Werkstück und Werkzeug sowie die davon herrührenden thermischen Belastungen erheblich. Die großen Hohlräume erlauben einen verbesserten Transport von Schneidhilfsstoffen wie z.B. Kühlschmierstoffen. Bei der Herstellung der Werkzeuge erleichtert die im wesentlichen kugelförmige Gestalt der Hohlkörper das Mischen der Komponenten erheblich im Vergleich mit keramischen Bruchstücken oder Konglomeraten nicht definierter Form. Schließlich ist es ein großer Vorteil, daß für die Bereitstellung der Hohlkörper auf ein bereits in großer und wirtschaftlich herstellbarer Menge verfügbares Halbzeug zurückgegriffen werden kann, nämlich die erwähnten HERMESIT®-Schleifkornhohlkugeln.

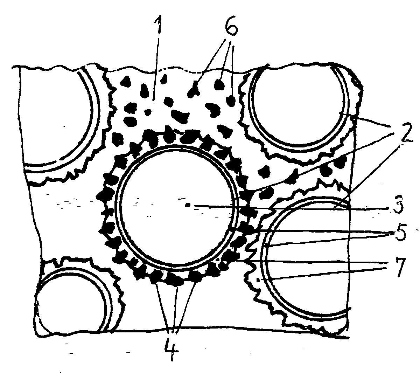

Die Zeichnung veranschaulicht den strukturellen Aufbau eines Honwerkzeugs. In einer Kunstharzmatrix 1 sind Schleifkorn-Hohlkugeln 2 eingelagert, die jeweils einen im wesentlichen sphärischen Hohlraum 3 enthalten. Die Schleifkörner 4 sind in der Schicht 7 mittels eines keramischen Bindemittels untereinander und ggf. mit einer keramischen Tragschale 5 verbunden. In der Matrix 1 sind ferner Einzelkörner 6 gleichmäßig verteilt enthalten. Die Matrix ist im wesentlichen porenfrei.

### Beispiel:

Für die Herstellung eines erfindungsgemäßen Honrings mit den Maßen 300 x 40 x 200 mm wird eine Rohstoff-Gesamtmenge von 4125 g bereitgestellt. Diese setzt sich wie folgt zusammen:
HERMESIT RE/AK Körnung P 120 32,75 Gew.%
   (Kugelaußendurchmesser 800 bis 1800 µm, mittlere Korngröße ca. 120 µm, mittlere Wanddicke ca. 300 µm)
Edelkorund weiß F 100 22,63 Gew.%
Elektrokorund F 120 22,63 Gew.%
Bindung:
handelsübliches Epoxidharz 21,99 Gew.%

Nach dem Abwiegen der Bestandteile werden zunächst Korn und Bindung 20 Minuten lang in einem Rührwerksmischer bei 25 min⁻¹ vermischt. Anschließend werden die keramischen Kornhohlkugeln (HERMESIT) hinzugefügt und 2 Minuten lang bei 180 min⁻¹ mit der übrigen Masse vermischt, so daß eine insgesamt homogene Mischung entsteht.

Eine vierteilige Form (Teller, Rand, Kern, Ring) wird gesäubert, mit Trennmittel ausgestrichen und auf einem rotierenden Drehteller fixiert. Die homogene Masse wird gleichmäßig eingefüllt und glattgestrichen. Nach dem Schließen der Form wird diese in einem Vorwärmofen 35 Minuten lang bei einer Ofentemperatur von 250°C vorgewärmt. Anschließend wird die Form in eine Heißpresse eingebaut und bei einer Nenntemperatur von 180°C mit einem Druck von 8 MPa 35 Minuten lang gepreßt.

Nach dem Abkühlen wird der vorgehärtete Honring ausgeformt und bei 165°C 6 Stunden lang fertiggehärtet. Der ausgehärtete Ring wird auf Maß gedreht und verzahnt.

## Patentansprüche

1. Honwerkzeug, insbesondere innen- oder außenverzahnter Honring zum Fertigbearbeiten von Zahnrädern, das in einer Matrix (1) aus weicherem Bindemittel eingebettete Hohlkörper (2) enthält, die aus durch eine härtere Bindung gebundenem Schleifkorn bestehen.

2. Honwerkzeug nach Anspruch 1, **dadurch gekennzeichnet, daß** das Verhältnis der E-Moduln des härteren und des weicheren Bindemittels mindestens 2:1 ist.

3. Honwerkzeug nach Anspruch 1 oder 2, **dadurch gekennzeichnet, daß** das härtere Bindemittel keramischer und das weichere Bindemittel organischer Art sind.

4. Honwerkzeug nach einem der Ansprüche 1 bis 3, **dadurch gekennzeichnet, daß** die Hohlkörper (2) kugelförmig sind.

5. Honwerkzeug nach einem der Ansprüche 1 bis 4, **dadurch gekennzeichnet, daß** die Bindung der Hohlkörper aus einer Tragschale (5) und einem das Schleifkorn (4) an deren Außenfläche bindenden Bindemittel besteht und wenigstens die Schale (5) oder das Bindemittel härter als das Bindemittel der Matrix (1) ist.

6. Honwerkzeug nach einem der Ansprüche 1 bis 5, **dadurch gekennzeichnet, daß** die Dicke der Kornschicht (7) der Hohlkörper im Mittel nicht größer ist als das Fünffache der mittleren Korngröße.

7. Honwerkzeug nach einem der Ansprüche 1 bis 6, **dadurch gekennzeichnet, daß** die Kornschicht (7) im wesentlichen nur die Dicke eines Schleifkorns (4) hat.

8. Honwerkzeug nach einem der Ansprüche 1 bis 7, **dadurch gekennzeichnet, daß** der mittlere Außendurchmesser der Hohlkörper (2) dem Fünf- bis Fünfundzwanzigfachen der mittleren Schleifkornabmessung gleicht.

9. Honwerkzeug nach einem der Ansprüche 1 bis 8, **dadurch gekennzeichnet, daß** der mittlere Außendurchmesser der Hohlkörper (2) einem Drittel bis einem Zwanzigstel der Zahnhöhe gleicht.

10. Honwerkzeug nach einem der Ansprüche 1 bis 9, **dadurch gekennzeichnet, daß** der volumetrische Anteil der Hohlkörper (2) zwischen 20 und 70 % des Gesamtvolumens des Honwerkzeugs beträgt.

11. Honwerkzeug nach einem der Ansprüche 1 bis 10, **dadurch gekennzeichnet, daß** die Bindemittelmatrix (1) zusätzliches Schleifkorn (6) enthält.

12. Honwerkzeug nach Anspruch 11, **dadurch gekennzeichnet, daß** die Schleifkornart und/oder -größe des in den Hohlkörpern (2) gebundenen Korns (4) und des zusätzlich in der Matrix (1) gebundenen Korns (6) etwa gleich sind.

13. Honwerkzeug nach einem der Ansprüche 1 bis 11, **dadurch gekennzeichnet, daß** der vorhandene Porenraum sich im wesentlichen auf die Hohlräume der Hohlkörper (2) beschränkt.
